# FASCICULE DE BREVET EUROPEEN

(11) **EP 1 155 626 B1**
(45) Date de publication et mention de la délivrance du brevet: **04.10.2006**
(21) Numéro de dépôt: 01401266.0
(22) Date de dépôt: 16.05.2001
(51) Int. Cl.: A23L 1/211

(54) **Procédé de détoxification des graines de lin**
Verfahren zur Entgiftung von Leinsamen
Process for detoxifying linseed

(30) Priorité: 16.05.2000 FR 0006212
(43) Date de publication de la demande: 21.11.2001
(73) Titulaire: Valorex, 35133 Javené (FR)
(72) Inventeur: Weill, Pierre, 35770 Vern sur Seiche (FR)
(74) Mandataire: Bloch, Gérard

(56) Documents cités:
- EP-A- 1 021 959
- EP-A- 1 021 960
- FR-A- 2 669 194
- FR-A- 2 732 560
- FR-A- 2 768 025

## Description

L'homme, pour la préservation de sa santé, a besoin d'acides gras, notamment d'acides gras polyinsaturés, et particulièrement d'acide linoléique C18: 2 ω6 et d'acide α-linolénique C18: 3 ω3, faisant respectivement partie des familles Oméga 6 et Oméga 3. Or l'organisme humain ne produit pas ces acides. Il faut donc qu'il les trouve dans la chaîne alimentaire.
On utilise depuis quelque temps les graines de lin dans l'alimentation aussi bien animale qu'humaine.

Plus particulièrement, on les utilise comme aliments spécifiques pour les animaux d'élevage (vaches, boeufs, poules pondeuses, agneaux, porcs) pour produire des laits et autres produits laitiers, des oeufs et des viandes permettant de modifier de manière significative les profils d'acides gras des consommateurs et, ainsi, d'améliorer la prévention des maladies cardio-vasculaires et de certains cancers en augmentant la concentration en Omega 3, ainsi d'ailleurs qu'en acide linoléique conjugué (ALC ou CLA), et en diminuant le rapport Omega 6/Omega 3.

La graine de lin contient environ 40 % en poids d'huile dont la teneur en Omega 3 est d'environ 60 %. Toutefois, sa teneur en facteurs anti-nutritionnels cyanogènes est loin d'être négligeable. On connaît les méfaits radicaux du cyanure ; il bloque la respiration cellulaire. Une alimentation à base de graines de lin implique donc une détoxification préalable.

Pour assurer cette détoxification, tout en provoquant l'éclatement des graines pour en libérer les huiles et améliorer leur assimilation par l'organisme animal, on a proposé d'extruder les graines de lin mais, sous l'action de la chaleur d'extrusion, purement mécanique et pouvant atteindre 150°C, et également de la vapeur d'extrusion, il se produit une hydrogénation destructrice de l'acide Oméga 3.

Ainsi, et à titre d'exemple, du fait de l'extrusion, on peut faire chuter la teneur en Oméga 3 de 12 %, c'est-à-dire perdre environ 25% d'Oméga 3, au profit des acides gras moins insaturés, ce qui est évidemment préjudiciable.

De surcroît, l'hydrogénation par la chaleur peut produire des acides gras insaturés de forme TRANS réputés cancérigènes ainsi que des monomères cycliques également préjudiciables à la santé de l'homme et de l'animal.

L'invention vise à remédier à cette difficulté.

A cet effet, elle concerne un procédé de détoxification de graines de lin selon la revendication 1.

L'invention est remarquable et caractérisée par les étapes mises en oeuvre entre le broyage et l'extrusion des graines.

L'imprégnation des graines par la vapeur catalyse la libération de l'acide cyanhydrique.

Grâce à l'état pâteux, les huiles sont libérées sans avoir trop à chauffer ce qui facilite la lubrification de la filière d'extrudeuse et donc augmente la vitesse d'écoulement linéaire des graines dans la filière en réduisant leur temps de passage et diminuant les frottements. En d'autres termes, grâce à l'invention, pour une libération d'huile donnée, la température s'élève moins.

Par FR 2 768 025, on connaît un procédé de détoxification de graines de lin. Mais dans ce procédé, le traitement thermique, au contraire de celui de la présente demande, ne vise pas à protéger les acides gras polyinsaturés. Par ce procédé de l'art antérieur, on cherche à protéger les matières grasses du lin de l'attaque microbienne dans le rumen des vaches. Cette protection est obtenue par une importante élévation de température, préjudiciable aux qualités nutritionnelles des acides gras. Elle est réservée à des préparations pour ruminants, le chauffage excessif nuisant à l'assimilation des acides gras par les animaux monogastriques.

Au contraire d'une protection par chauffage, le procédé de la présente demande permet une libération des huiles qui en favorise l'assimilation par les microbes de la panse dans le cas des ruminants, et par les enzymes pancréatiques dans le cas des animaux monogastriques.

On notera que les documents EP 1 021 959 et EP 1 021 960 enseignent des procédés du type de celui qui est revendiqué, mais et notamment avec une étape de maturation de 30° à 90°C sous atmosphère saturée de vapeur.

On a constaté qu'on pouvait ne pas dépasser une température de 115°C, propice à une détoxification satisfaisante préservant les acides gras polyinsaturés.

De préférence, on soumet les graines à une imprégnation de vapeur préparatoire de 2 à 3 minutes.

Avantageusement, on soumet les graines broyées et imprégnées de vapeur à une maturation de longue durée, de l'ordre de 15 minutes à une heure, de préférence de 15 à 45 minutes, de préférence encore de l'ordre de 30 minutes.

Avantageusement encore, après broyage des graines de lin et avant leur imprégnation de vapeur, les graines broyées sont mélangées avec un composé cellulosique ou amidonné, pour faciliter l'imprégnation de vapeur et l'extrusion.

Après extrusion, on soumet avantageusement les graines à un refroidissement puis à un séchage assurant, de préférence, une perte en poids supplémentaire de 5 %, une perte semblable ayant déjà été subie en fin d'extrusion.

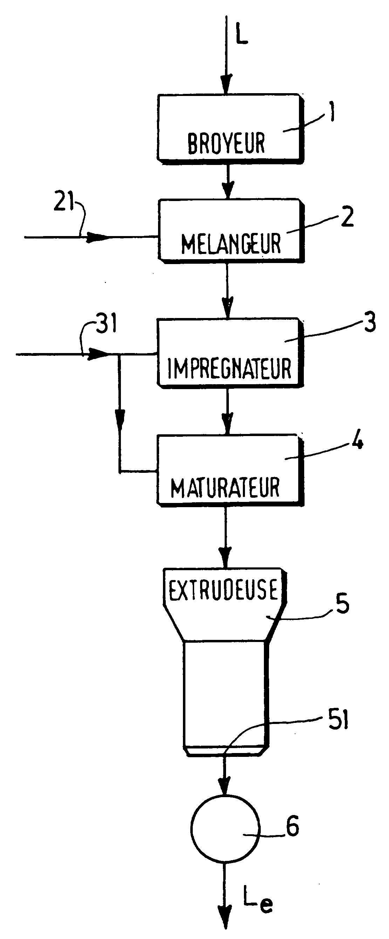

L'invention sera mieux comprise à l'aide de la description suivante de la mise en oeuvre du procédé de l'invention en référence à la figure unique y annexée.

On introduit les graines de lin L dans un broyeur 1. Il peut s'agir d'un broyeur à rouleaux ou d'un broyeur à marteaux, par exemple, pourvu de grilles à orifices de sensiblement moins de 3 mm de passage.

Les graines broyées passent ensuite dans un mélangeur 2, où elles sont mélangées avec un composé 21 cellulosique ou amidonné, par exemple des grains de céréales, des co-produits de grains de céréales, des tourteaux de graines oléagineuses ou encore des protéagineux.

Le mélange de graines broyées est envoyé dans un imprégnateur 3 où il est soumis à une phase d'imprégnation de vapeur 31 durant deux à trois minutes. Cette imprégnation déclenche l'hydrolyse des glucosides cyanogènes qui libère l'acide cyanhydrique très volatil.

On notera qu'une élévation de température trop rapide détruirait l'enzyme et empêcherait donc la libération d'acide cyanhydrique dans un milieu inorganique ; les cyanogènes resteraient intacts.

Le mélange de graines broyées et préparées est alors soumis à l'action de la vapeur 31 dans un maturateur 4, où il reste environ trente minutes, jusqu'à devenir pâteux, sans que sa température ne dépasse 100°C. On a souligné plus haut déjà tout l'intérêt de cette maturation.

Ensuite, les graines broyées, mélangées préparées et imprégnées de vapeur sont envoyées dans une extrudeuse 5, ici à vis unique et à filière 51 plate ou conique, où elles passent rapidement, leur température ne dépassant pas sensiblement 115°C. A la sortie de l'extrudeuse, le flash vapeur représente plus de 5 % en poids du produit introduit dans l'extrudeuse.

A la sortie de l'extrudeuse 5, les échanges avec l'air ambiant refroidissent les graines extrudées Lₑ qui sont ensuite séchées à l'air chaud 6 pour assurer une perte en poids supplémentaire de 5 % au moins.

Les composés cyanogènes du lin sont formés d'une ou deux molécules de glucose, rattachées à une fonction cyanure. On distingue essentiellement deux diglucosides cyanogènes (linustatine et néolinustatine) et des monoglucosides cyanogènes (linamarine). Sous l'action d'une première enzyme, les diglucosides sont hydrolysés en monoglucosides, qui renferment la fonction cyanure CN, et ces monoglucosides, à leur tour, sont hydrolysés sous l'action d'une autre enzyme qui libère la fonction cyanure sous forme d'acide cyanhydrique HCN.

On a jusqu'à maintenant appréhendé la toxicité cyanogène des graines de lin généralement par mesure de la production d'acide cyanhydrique HCN. Mais ce procédé de mesure n'est pas idéal. En effet, si la chaleur peut effectivement inactiver l'enzyme d'hydrolyse des monoglucosides et freiner la libération de HCN, cette enzyme se trouve aussi présente dans les organismes animaux à différents endroits du tractus digestif.

C'est pourquoi, la demanderesse a préféré effectuer des mesures, non pas seulement de HCN, mais aussi des cyanogènes eux-mêmes et mesurer ainsi le véritable potentiel de toxicité.

Les divers essais effectués par la demanderesse ont abouti au premier tableau ci-dessous :

| teneur en mg/kg brut | graines de lin crues | tourteaux de lin | graines de lin détoxifiées |
|---|---|---|---|
| cyanogènes | 4 000 | 3 500 | 800 |
| HCN | 265 | 175 | 50 |

Et pour mieux encore appréhender la réussite du traitement de détoxication et la préservation du profil d'acide gras, on a mesuré la teneur des cyanogènes et de HCN pour 1 kg d'Oméga 3 apporté par le lin, selon le tableau suivant :

| Teneur en mg/kg ω₃ | graines de lin crues | tourteaux de lin | graines de lin détoxifiées |
|---|---|---|---|
| cyanogènes | 18 000 | 104 000 | 2 850 |
| HCN | 1 100 | 6250 | 160 |

Les taux de cyanogènes et de HCN pour 1 kg d'Oméga 3 apporté par le lin ont également été mesurés et calculés, ramenés à la fraction digestible des huiles, selon le tableau suivant :

| Teneur en mg/kg ω₃ | graines de lin crues | tourteaux de lin | graines de lin détoxifiées |
|---|---|---|---|
| cyanogènes | 60000 | 520000 | 3 500 |
| HCN | 3 700 | 31 250 | 2000 |

## Revendications

1. Procédé de détoxification de graines de lin, selon les étapes suivantes :
- broyage (1) des graines,
- soumission des graines broyées à une imprégnation de vapeur préparatoire (3), la courte durée, inférieure à 5 minutes,
- soumission des graines broyées et imprégnées à une maturation (4) dans un maturateur où elles restent jusqu'à un état pâteux,
- extrusion (5) des graines, par mise en pression et passage à travers une filière d'extrudeuse, ainsi lubrifiée.

2. Procédé selon la revendication 1, dans lequel l'imprégnation de vapeur préparatoire (3) dure de 2 à 3 minutes.

3. Procédé selon l'une des revendications 1 et 2, dans lequel la maturation des graines broyées et imprégnées de vapeur s'effectue par une imprégnation de vapeur (3) de longue durée, sensiblement de 15 minutes à une heure.

4. Procédé selon la revendication 3, dans lequel la maturation (4) dure de 15 à 45 minutes.

5. Procédé selon la revendication 4, dans lequel la maturation (4) dure environ 30 minutes.

6. Procédé selon l'une des revendications 1 à 5, dans lequel après broyage (1) des graines de lin et avant leur imprégnation de vapeur (3, 4), les graines broyées sont mélangées (2) avec un composé cellulosique ou amidonné.

7. Procédé selon l'une des revendications 1 à 6, dans lequel après extrusion (5), on soumet les graines à un refroidissement puis à un séchage (6).

## Claims

1. Process for the detoxification of linseed, in accordance with the following steps:
- crushing (1) of the seed,
- subjecting the crushed seed to preliminary steam soaking (3), of short duration of less than 5 minutes,
- subjecting the crushed and soaked seed to an ageing process (4) in a soaker where it remains until it reaches a party state,
- extruding (5) the seed by pressurisation and passage through an extruding die, thus lubricated.

2. Process as described in claim 1, in which the preliminary steam soaking (3) lasts from 2 to 3 minutes.

3. Process as described in one of claims 1 and 2, in which the ageing of the crushed and steam-soaked seed is achieved by steam soaking (3) of long duration, approximately from 15 minutes to 1 hour.

4. Process as described in claim 3, in which the ageing (4) lasts from 15 to 45 minutes.

5. Process as described in claim 4, in which the ageing (4) lasts about 30 minutes.

6. Process as described in one of claims 1 to 5, in which after crushing (1) of the linseed and before it is steam soaked (3, 4) the crushed seed is mixed (2) with a cellulose- or starch-containing compound.

7. Process as described in any of claims 1 to 6 in which after extrusion (5) the seed is subjected to cooling and then drying (6).

## Patentansprüche

1. Verfahren zur Detoxifikation von Leinsamen gemäß den folgenden Schritten:
- Zerkleinerung (1) der Samen,
- Unterziehen der zerkleinerten Samen einer vorbereitenden Dampfimprägnierung (3) einer kurzen Dauer von weniger als 5 Minuten,
- Unterziehen der zerkleinerten und imprägnierten Samen einer Reifung (4) in einem Reifungsgerät, wo sie bleiben, bis sie in einem pastösen Zustand sind,
- Extrusion (5) der Samen durch Druckbeaufschlagung und Durchleiten durch eine auf diese Weise gefettete Extruderdüse.

2. Verfahren nach Anspruch 1, wobei die vorbereitende Dampfimprägnierung (3) 2 bis 3 Minuten dauert.

3. Verfahren nach einem der Ansprüche 1 und 2, wobei die Reifung der zerkleinerten und mit Dampf imprägnierten Samen bewirkt wird mit einer Dampfimprägnierung (3) einer langen Dauer von im wesentlichen 15 Minuten bis 1 Stunde.

4. Verfahren nach Anspruch 3, wobei die Reifung (4) eine Dauer von 15 bis 45 Minuten hat.

5. Verfahren nach Anspruch 4, wobei die Reifung (4) eine Dauer von ungefähr 30 Minuten hat.

6. Verfahren nach einem der Ansprüche 1 bis 5, wobei nach der Zerkleinerung (1) der Leinsamen und vor ihrer Dampfimprägnierung (3, 4) die zerkleinerten Samen mit einer Zellulose- oder Stärkeverbindung gemischt werden (2).

7. Verfahren nach einem der Ansprüche 1 bis 6, wobei die Samen nach der Extrusion (5) einer Abkühlung und dann einer Trocknung (6) unterzogen werden.
